(19)

**Europäisches Patentamt**
**European Patent Office**
**Office européen des brevets**

(11)    **EP 2 422 521 B1**

(12)    **EUROPEAN PATENT SPECIFICATION**

(45) Date of publication and mention
of the grant of the patent:
**03.07.2013   Bulletin 2013/27**

(21) Application number: **10719456.5**

(22) Date of filing: **20.04.2010**

(51) Int Cl.:
***H04N 7/26*** *(2006.01)*

(86) International application number:
**PCT/US2010/031693**

(87) International publication number:
**WO 2010/123855 (28.10.2010 Gazette 2010/43)**

(54) **FILTER SELECTION FOR VIDEO PRE-PROCESSING IN VIDEO APPLICATIONS**

FILTERAUSWAHL FÜR VIDEOVORVERARBEITUNG BEI VIDEOANWENDUNGEN

SÉLECTION DE FILTRE POUR UN PRÉTRAITEMENT VIDÉO DANS DES APPLICATIONS VIDÉO

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.04.2009   US 170995 P
04.07.2009   US 223027 P
14.09.2009   US 242242 P**

(43) Date of publication of application:
**29.02.2012   Bulletin 2012/09**

(60) Divisional application:
**12189053.7**

(73) Proprietor: **Dolby Laboratories Licensing
Corporation
San Francisco, CA 94103-4813 (US)**

(72) Inventors:
• **PAHALAWATTA, Peshala V.
Burbank
California 91505-5300 (US)**
• **LEONTARIS, Athanasios
Mountain View,
California 94043 (US)**
• **TOURAPIS, Alexandros
Milpitas, CA 95035 (US)**

(74) Representative: **Soellner, Siegfried
Dolby International AB
Apollo Building, 3E
Herikerbergweg 1-35
NL-1101 CN Amsterdam (NL)**

(56) References cited:
**EP-A1- 1 631 090     US-A1- 2008 192 822**

• **TOURAPIS A M ET AL: "SEI message for
checkerboard multiplexed video data" JOINT
VIDEO TEAM (JVT) OF ISO/IEC MPEG & ITU-T
VCEG(ISO/IEC JTC1/SC29/WG11 AND ITU-T
SG16 Q6), XX, XX, no. JVT-2010, 12 October 2008
(2008-10-12), pages 1-5, XP002578517**
• **AMMAR N ET AL: "Switched SVC upsampling
filters" ITU STUDY GROUP 16 - VIDEO CODING
EXPERTS GROUP -ISO/IEC MPEG & ITU-T VCEG
(ISO/IEC JTC1/SC29/WG11 AND ITU-T SG16 Q6),
XX, XX, no. JVT-R075, 11 January 2006
(2006-01-11) , XP030006342**
• **MERKLE P ET AL: "Efficient Prediction
Structures for Multiview Video Coding" IEEE
TRANSACTIONS ON CIRCUITS AND SYSTEMS
FOR VIDEO TECHNOLOGY, IEEE SERVICE
CENTER, PISCATAWAY, NJ, US LNKD- DOI:
10.1109/TCSVT.2007.903665, vol. 17, no. 11, 1
November 2007 (2007-11-01), pages 1461-1473,
XP011195138 ISSN: 1051-8215**

## Description

### FIELD

The present disclosure relates to video applications. More in particular, embodiments of the present invention relate to methods and devices for selection of pre-processing filters and filter parameters given the knowledge of a base layer (BL) to enhancement layer (EL) prediction process occurring in the EL decoder and encoder. The methods and devices can be applied to various applications such as, for example, spatially or temporally scalable video coding, and scalable 3D video applications.

### BRIEF DESCRIPTION OF THE DRAWINGS

> FIGURE 1 shows a scalable video encoding architecture comprising a base layer (BL) encoding section and an enhancement layer (EL) encoding section.
> FIGURE 2 shows a decoding architecture corresponding to the encoding system of FIGURE 1.
> FIGURE 3 shows an open loop process for performing pre-processor optimization.
> FIGURE 4 shows a closed loop process for performing pre-processor optimization.
> FIGURE 5 shows a further example of closed loop process where simplified encoding occurs.
> FIGURE 6 shows a pre-processing filter stage preceded by a sequence/image analysis stage.
> FIGURE 7 shows pre-processing filter selection through feedback received from the EL encoder.
> FIGURE 8 shows an architecture where pre-processing filter parameters are predicted based on the filters used for the previous images.

### DESCRIPTION OF EXAMPLE EMBODIMENTS

Methods and devices for selection of pre-processing filters are described.

According to a first example, a method for selecting a pre-processing filter for video delivery is provided, comprising: inputting one or more input images into a plurality of pre-processing filters; processing the output of each pre-processing filter to form, for each pre-processing filter, an output image or data stream; for each pre-processing filter, evaluating a metric of the output image or data stream; and selecting a pre-processing filter among the plurality of pre-processing filters based on the evaluated metric for each pre-processing filter.

According to a second example, a method for selecting a pre-processing filter for video delivery is provided, comprising: analyzing an input image; selecting a region of the input image; evaluating whether a new selection for a pre-processing filter for the selected region has to be made; if a new selection has to be made, selecting a pre-processing filter; and if no new selection has to be made, selecting a previously selected pre-processing filter.

According to a third example, a pre-processing filter selector for video delivery is provided, comprising: a plurality of pre-processing filters adapted to receive an input image; processing modules to process the output of each pre-processing filter to form an output image or data stream; metrics evaluation modules to evaluate, for each pre-processing filter, a metric of the output image or data stream; and a pre-processing filter selector to select a pre-processing filter among the plurality of pre-processing filters based on the evaluated metric for each pre-processing filter by the distortion modules.

According to a fourth example, an encoder for encoding a video signal according to the method or methods recited above is provided.

According to a fifth example, an apparatus for encoding a video signal according to the method or methods recited above is provided.

According to a sixth example, a system for encoding a video signal according to the method or methods recited above is provided.

According to a seventy example, a computer-readable medium containing a set of instructions that causes a computer to perform the method or methods recited above is provided.

According to an eighth example, the use of the method or methods recited above to encode a video signal is provided.

One method for scalable video delivery is to subsample the original video to a lower resolution and to encode the subsampled data in a base layer (BL) bitstream. The base layer decoded video can then be upsampled to obtain a prediction of the original full resolution video. The enhancement layer (EL) can use this prediction as a reference and encode the residual information that is required to recover the original full resolution video. The resolution subsampling can occur in the spatial, temporal and pixel precision domains. See, for example, J.R. Ohm, "Advances in Scalable Video Coding," Proceedings of the IEEE, vol. 93, no. 1, January 2005. Scalable video delivery may also be related to bitdepth scalability, as well as 3D or multiview scalability.

While the figures and some embodiments of the present application make reference to a single enhancement layer, the present disclosure is also directed to cases where more than one enhancement layer is present, to further improve the quality of the decoded video, or to improve the functionality/flexibility/complexity of the video delivery system.

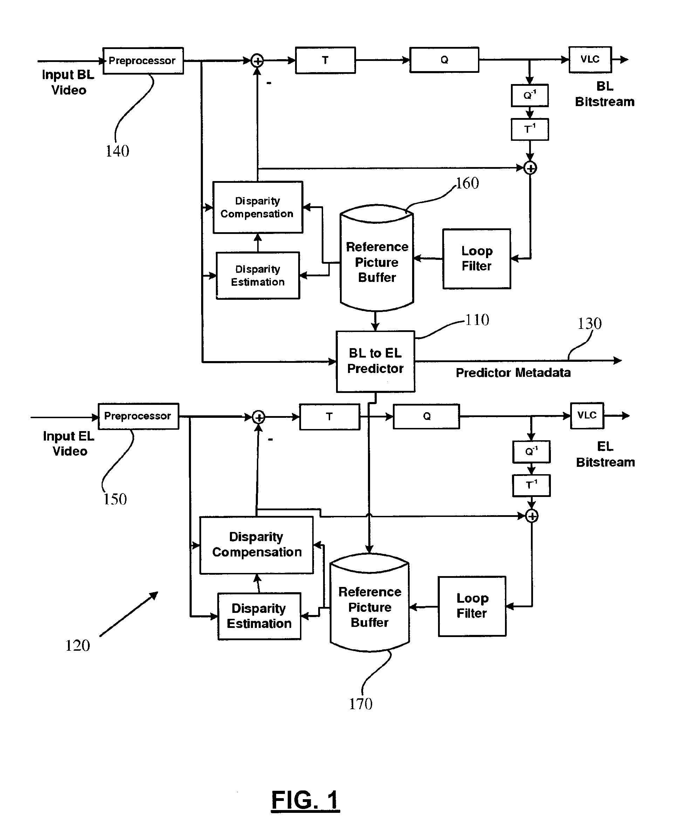

FIGURE 1 illustrates an example of such a scalable video coding system where, by way of example, only one enhancement layer is used. The BL (Base Layer) to EL (Enhancement Layer) predictor module (110) predicts the EL from the reconstructed BL video and inputs the prediction as a reference to the EL encoder (120).

In the case of stereo or multi-view video data transmission, the subsampling can be a result of interleaving of different views into one image for the purpose of transmission over existing video delivery pipelines. For example, checkerboard, line-by-line, side-by-side, over-under, are some of the techniques used to interleave two stereoscopic 3D views into one left/right interleaved image for the purpose of delivery. In each case, different sub-sampling methods may also be used such as quincunx, horizontal, vertical, etc.

US Provisional Application No. 61/140,886 filed on December 25, 2008 shows a number of content adaptive interpolation techniques that can be used within the BL to EL predictor block (110) of FIGURE 1. Additionally, US Provisional Application No. 61/170,995 filed on April 20, 2009 shows directed interpolation techniques, in which the interpolation schemes are adapted depending on content and the image region to be interpolated, and the optimal filters are signaled as metadata to the enhancement layer decoder.

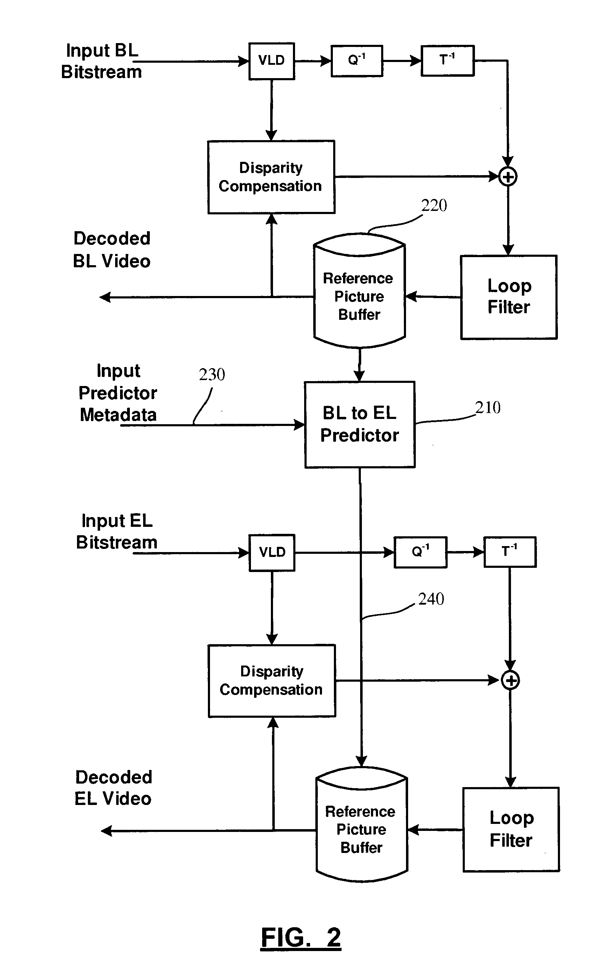

FIGURE 2 shows the corresponding decoder architecture for the BL and EL. The BL to EL predictor (210) on the decoder side uses the base layer reconstructed images (220) along with guided interpolation metadata (230) -corresponding to the predictor metadata (130) of FIGURE 1- to generate a prediction (240) of the EL. Predictor metadata are discussed more in detail in US Provisional 61/170,995 filed on April 20, 2009,

Turning back to FIGURE 1, the creation of the BL and EL images can be preceded by pre-processing modules (140), (150). Pre-processing is applied to images or video prior to compression in order to improve compression efficiency and attenuate artifacts. The pre-processing module can, for example, comprise a downsampling filter that is designed to remove artifacts such as aliasing from the subsampled images. The downsampling filters can be fixed finite impulse response (FIR) filters such as those described in W. Li, J-R. Ohm, M. van der Schaar, H. Jiang and S. Li, "MPEG-4 Video Verification Model Version 18.0," ISO/IEC JTC1/SC29/WG11 N3908, January 2001, motion compensated temporal filters such as those described in E. Dubois and S. Sabri, "Noise Reduction in Image Sequences Using Motion-Compensated Temporal Filtering," IEEE Trans. on Communications, Vol. COM-32, No. 7, July 1984, or adaptive filters such as those described in S. Chang, B. Yu, and M. Vetterli, "Adaptive Wavelet Thresholding for Image Denoising and Compression," IEEE Trans. On Image Processing, vol. 9, no. 9, pp. 1532-1546, September 2000. The downsampling filters can also be jointly optimized with a particular upsampling/ interpolation process such as that described in Y. Tsaig, M. Elad, P. Milanfar, and G. Golub, "Variable Projection for Near-Optimal Filtering in Low Bit-Rate Coders," IEEE Trans. on Circuits and Systems for Video Technology, vol. 15, no. 1, pp. 154-160, January 2005.

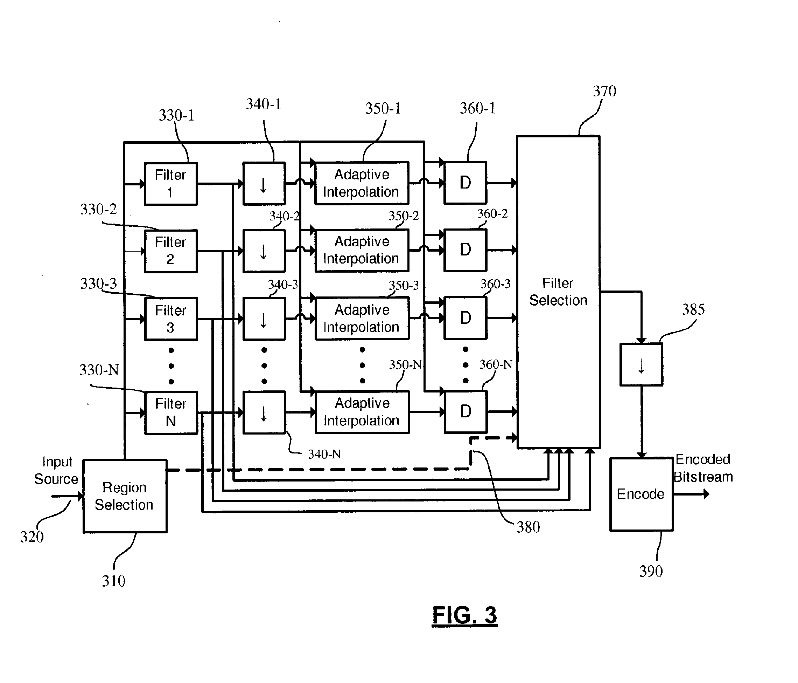

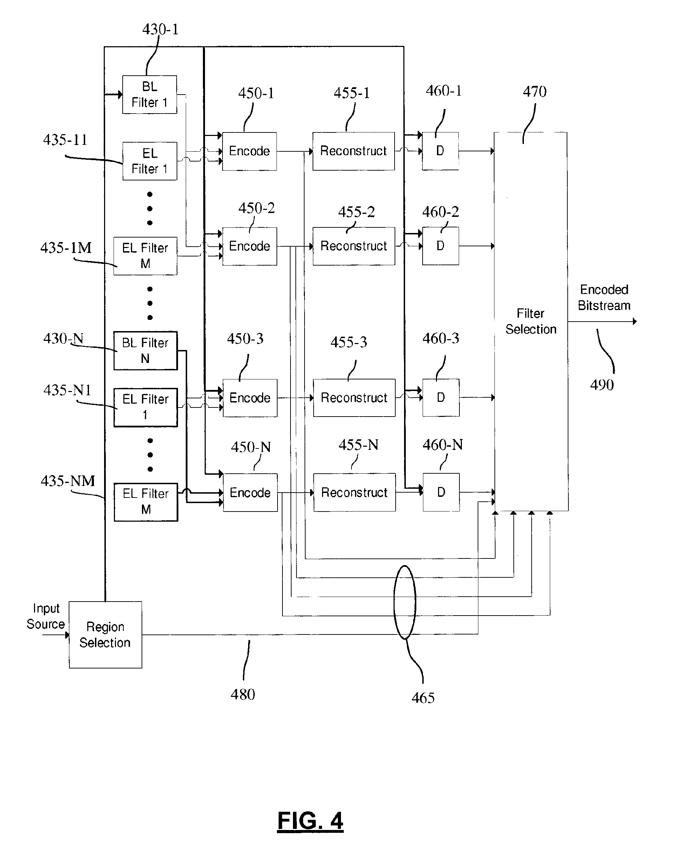

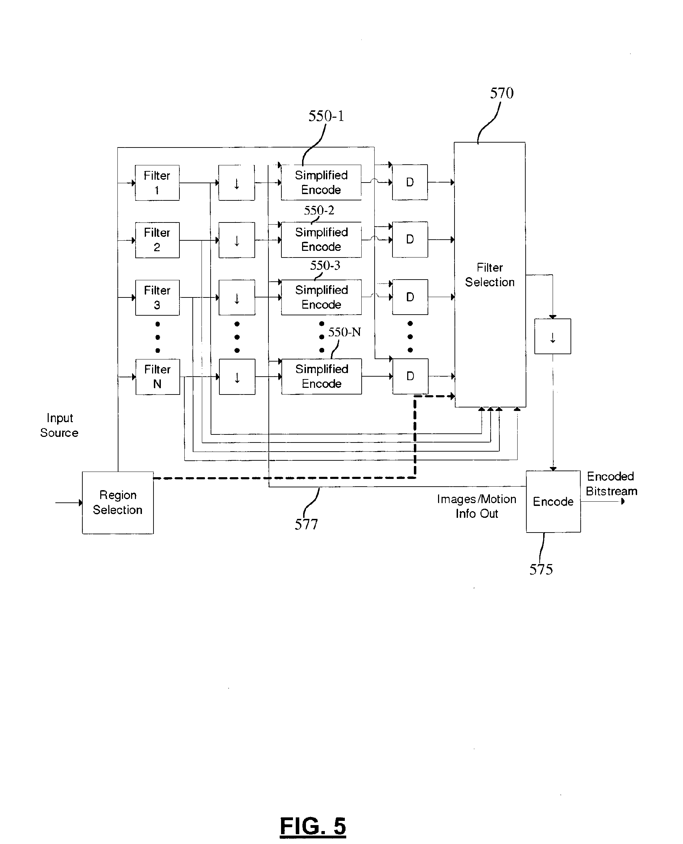

In the following figures, examples of methods and devices for selection of pre-processing filters and filter parameters given the knowledge of the prediction process from one layer to the other (e.g., BL to EL) will be described. In particular, the example of FIGURE 3 contains a hypothesis for how the BL to EL prediction will be performed. Such hypothesis is not based on the prediction from the actual BL reconstructed images after compression and is instead based on the prediction from the uncompressed images (open loop). On the other hand, the examples of FIGURE 4 relate on prediction from BL reconstructed images after compression (closed loop). As shown in FIGURE 5, however, a simplified compression may be used for the purpose of reducing the complexity of the filter selection process. The simplified compression approximates the behavior of the full compression process, and allows the consideration of coding artifacts and bit rates that may be introduced by the compression process.

FIGURE 3 shows an example of a pre-processor and pre-processing optimization method in accordance with the disclosure. An optional region selection module (310) separates an input image or source (320) into multiple regions. An example of such region selection module is described in US Provisional Application No. 61/170,995 filed on April 20, 2009. Separation of the input image into multiple regions allows a different preprocessing and adaptive interpolation to be performed in each region given the content characteristics of that region.

For each region, a search for the optimal preprocessing filter is performed over a set of filters 1-N denoted as (330-1), (330-2), (330-3), ..., (330-N). The preprocessing filters can be separable or non-separable filters, FIR filters, with different support lengths, directional filters such as horizontal, vertical or diagonal filters, frequency domain filters such as wavelet or discrete cosine transform (DCT) based filters, edge adaptive filters, motion compensated temporal filters, etc.

The output of each filter (330-i) is then subsampled to the resolution for the BL in respective subsampling modules (340-1), (340-2), (340-3), ..., (340-N).

The person skilled in the art will also understand that other embodiments of the pre-processing filters and subsampling modules are also possible, e.g., the preprocessing filters and the subsampling modules can be integrated together in a single component or the preprocessing filters can follow the subsampling modules instead of preceding them as shown in FIGURE 3.

In the case of a 3D stereoscopic scalable video coding system, the subsampled output of each filter is then sent through a 3D interleaver to create subsampled 3D interleaved images that will be part of the base layer video. An example of a 3D interleaver can be found in US Pat. No. 5,193,000. On the other hand, in a non-3D case, a decimator can be provided. Then, the subsampled images are adaptively upsampled using methods such as those described in US Provisional 61/140,886 and US Provisional 61/170,995. The 3D interleaver or decimator and the adaptive upsampling (or, more generally, a technique that processes the subsampled output to form an output image or bitstream) are generically represented as blocks (350-1), (350-2), (350-3), ..., (350-N) in FIGURE 3. As shown in the figure, the adaptive interpolation also uses the original unfiltered information to determine the best interpolation filter. Such information is output from the region selection module (310).

In the distortion calculation modules (360-1), (360-2), (360-3), ..., (360-N), the upsampled images are compared to the original input source and a distortion measure is computed between the original and the processed images. Distortion metrics such as mean squared error (MSE), peak signal to noise ratio (PSNR), as well as perceptual distortion metrics that are more tuned to human visual system characteristics may be used for this purpose.

A filter selection module (370) compares the distortion characteristics of each pre-processing filter (330-i) and selects the optimal pre-processor filter for encoding of that region of the video. The output of the selected filter is then downsampled (385) and further sent through the encoding process (390). Alternatively, the block 370 can select among already downsampled outputs of the filters instead of selecting among the filters. In such case, the downsampling module 385 will not be needed.

The filter selection module (370) may also receive as input (380) additional region-based statistics such as texture, edge information, etc. from the region selector (310), which can help with the filter decisions. For example, depending on the region, the weights given to the distortion estimates of one filter may be increased over another.

The open loop process of FIGURE 3 is not optimal, in the sense that in an actual system, as the one depicted in FIGURE 1, the adaptive interpolation for BL to EL prediction occurs on the decoder reconstructed BL images and not on the original pre-processed content. The open loop process, however, is less computationally intensive and can be performed "offline" prior to the actual encoding of the content.

The person skilled in the art will also understand that the example FIGURE 3 is not specific to a scalable architecture. Moreover, such example can be applied only to the EL, only to the BL, or both the EL and the BL. Still further, different pre-processors can be used for the BL and EL, if desired. In the case of EL pre-processing, downsampling can still occur on the samples, e.g., samples that were not contained in the BL.

FIGURE 4 illustrates a further of the present disclosure, where a closed-loop process for performing pre-processor optimization is shown. In particular, an encoding step (450-i) is provided for the subsampled output of each filter (430-i). In the encoding step (450-i) each output of the filters is fully encoded and then reconstructed (455-i), for example according to the scheme of FIGURE 1. In the case of scalable video encoding, such encoding comprises BL encoding, adaptive interpolation for BL to EL prediction, and EL encoding. FIGURE 4 shows an example where both EL filters (435-11) ... (435-1M) are provided for BL filter (430-1) and so on, up to BL filter (430-N), for which EL filters (435-N1) ... (435-NM) are provided.

The encoded and reconstructed bitstreams at the output of modules (455-i) are used for two purposes: i) calculation of distortions (460-i) and ii) inputs (465) of the filter selection module (470). In particular, the filter selection module (470) will select one of the inputs (465) as output encoded bitstream (490) according to the outputs of the distortion modules (460-i). More specifically, the filter that shows the least distortion for each region is selected as the pre-processor.

Filter optimization according to the example of FIGURE 4 can also consider the target or resulting bit rate, in addition to the distortion. In other words, depending on the filter selected, the encoder may require a different number of bits to encode the images. Therefore, in accordance with an embodiment of the present disclosure, the optimal filter selection can consider the bits required for encoding, in addition to the distortion after encoding and/or post-processing. This can be formulated as an optimization problem where the objective is to minimize the distortion subject to a bit rate constraint. A possible technique for doing that is Lagrangian optimization. Such process occurs in the filter selection module (470) and uses i) the distortion computed in the D modules (460-i) and ii) the bit rates available from the encode modules (450-i).

More generally, optimization based on one or more of several types of metrics can also be performed. These metrics can include distortion and/or bit rate mentioned above, but can also be extended to cost, power, time, computational complexity and/or other types of metrics.

While the method discussed in the above paragraph will provide the rate-distortion optimal filter results, it is highly computationally intensive. Several methods for reducing the computational burden of such embodiment will be discussed in the next figures.

FIGURE 5 shows an alternative example where, for each potential filter selection, instead of computing the true encoded and decoder reconstructed image, a simplified encoding (550-i) and reconstruction is used as an estimate of the true decoder reconstruction.

For example, full complexity encoding (575) can be performed only after the filter selection (570) has been completed. Then, the simplified encoders (550-i) can be updated using, for example, the motion and reconstructed image information (577) from the full complexity encoder (575). For example, the reference picture buffers (see elements 160, 170 of FIGURE 1) of the simplified encoders can be updated to contain the reconstructed images from the simplified encoder. Similarly, the motion information generated at the full encoder for previous regions can be used in the disparity estimation module of the simplified encoders (550-i). By way of example, the simplified encoder could create a model based on intra only encoding that uses the same quantization parameters used from the full complexity encoder. Alternatively, the simplified encoder could use filtering that is based on a frequency relationship to quantization parameters used, e.g., by creation of a quantization parameter-to-frequency model. Additionally, should higher accuracy be required, a mismatch between simplified and full complexity encoders could be used to further update the model.

Simplified encoding performed by blocks (550-i) prior to filter selection can be, for example, intra-only encoding in order to eliminate complexity of motion estimation and compensation. On the other hand, if motion estimation is used, then sub-pixel motion estimation may be disabled. A further alternative can be that of using a low complexity rate distortion optimization method instead of exploring all possible coding decisions during compression. Additional filters such as loop filters and post-processing filters may be disabled or simplified. To perform simplification, one can either turn the filter off completely, or limit the number of samples that are used for filtering. It is also possible to tune the filter parameters such that the filter will be used less often and/or use a simplified process to decide whether the filter will be used for a particular block edge. Additionally, filters used for some chroma components may be disabled and estimated based on those used for other chroma or luma components. Also, in another example the filter selection can be optimized for a sub-region (e.g., the central part of each region), instead of optimizing over an entire region. In some cases, the simplified encoder may also perform the encoding at a lower resolution or at a lower rate distortion optimization (RDO) complexity. Moreover, disparity estimation can be constrained to only measure the disparity in full pixel units instead of sub-pixel units. Simplified entropy coding (VLC module) can also be used. Still further, only the luma component for the image can be encoded, and the distortion and rate for the chroma component can be estimated as a function of the luma. In another embodiment, the simplified encoding may simply be a prediction process that models the output of blocks 550-i based on the previous output of the full encoder (block 575).

All of the above options can occur in the simplified encoders (550-i). In other words, the simplified encoders (550-i) can comprise all of the encoding modules shown in FIGURE 1 and each of those modules can be simplified (alone or in combination) as described above, trying to keep the output not significantly different from the output of a full encoder.

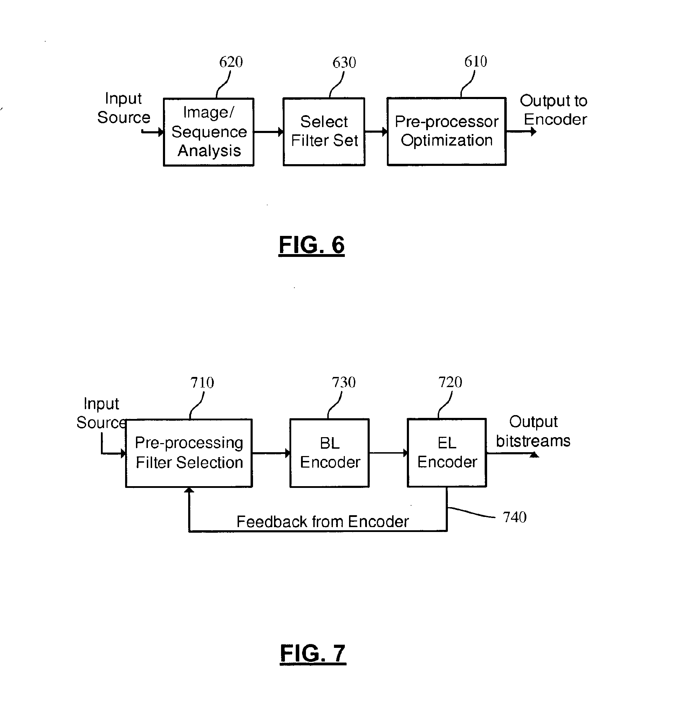

FIGURE 6 shows a further example of the present disclosure, where a pre-processing filter stage (610) is preceded by a sequence/image analysis stage (620). The analysis stage (620) can determine a reduced set (630) of pre-processing filters to be used in the optimization. The image/sequence analysis block (620) can comprise a texture and/or variance (in the spatial domain and/or over time) computation to determine the type of filters that are necessary for the particular application at issue. For example, smooth regions of the image may not require any pre-filtering at all prior to encoding. Some regions may require both spatial and temporal filtering while others may only require spatial or temporal filtering. In the case of bitdepth scalability, the tonemapping curves may be optimized for each region. If directional filters are used, the image analysis module (620) may include edge analysis to determine whether directional filters should be included in the optimization and if so, to determine the dominant directions along which to perform the filtering. If desired, these techniques can be incorporated also in the region selection module. Also, an early termination criterion may be used by which if a filter is shown to provide a rate-distortion performance above a specified threshold, no further filters are evaluated in the optimization. Such method can be easily combined with the image analysis to further reduce the number of filters over which a search is performed.

FIGURE 7 shows yet another example of the present disclosure, where the pre-processing filter selection (710) is aided by additional feedback (740) (in addition to the distortion measure) received from the enhancement layer encoder (720). For example, the feedback could include information on the adaptive upsampling filter parameters used in order to generate the BL to EL prediction. As a consequence, the downsampling filter selection can be adapted to suit the best performing adaptive upsampling filter from the previous stage of optimization. This may also aid in the selection of regions for pre-processing.

For example, the image can be separated into multiple smaller regions and, in the initial stage, a different pre-processing filter can be assumed for each region. Such example can be useful in a simplified system where no prior image analysis is done. In such case, the upsampling information (e.g., whether the upsampler selected the same upsampling filter for multiple regions) can be treated as an indication of how the best downsampling filter selection should also behave. For example, if the upsampling filters are the same for the entire image, maybe it is not necessary to partition the image into regions and optimize the downsampling filters separately for each region.

After encoding the BL in module (730), however, the BL to EL prediction optimization may determine that the same upsampling filter was sufficient for the prediction of multiple regions of the image. In that case, the pre-processor can also be adapted to choose the same, or similar, pre-processing filter for those regions. This will reduce the number of regions over which the entire closed loop optimization needs to be performed, and therefore reduce the computation time of the process. More generally, this step can apply also to configurations different from BL/EL configurations.

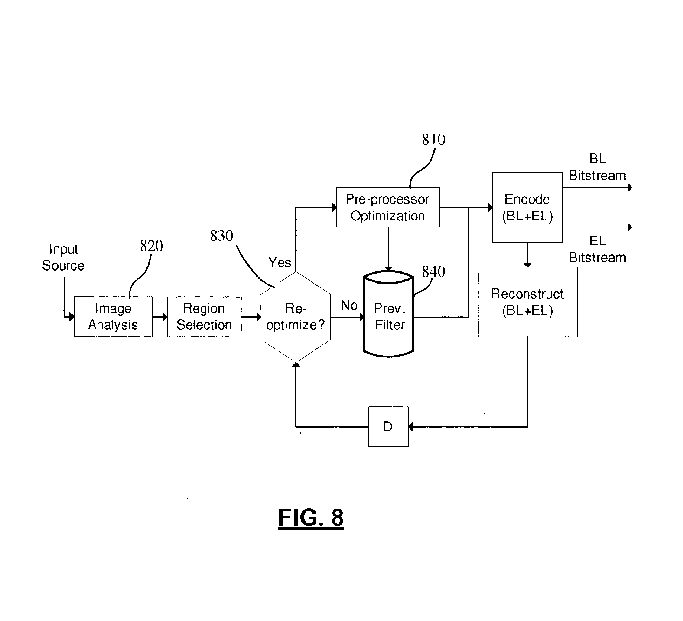

The computational burden of the pre-processor optimization can be further reduced by prediction of the pre-processing filter parameters based on the filters used for previous images, or image regions, of the sequence. FIGURE 8 illustrates an example of such system.

For example, the pre-processor optimization (810) can be performed once every N images/regions where N is fixed or adapted based on the available computing resources and time. In one embodiment, the decision (830) of whether to use previously optimized filter parameters can be dependent on information obtained from the image analysis module (820) (see also the image analysis module (620) of FIGURE 6). For example, if two images, or image regions, are found to be highly correlated, then the filter parameters need to be optimized only once for one of the regions and can then be re-used/refined (840) for the other region. The image regions may be spatial or temporal neighbors or, in the multi-view case, corresponding image regions from each view. For example, when considering two consecutive images of the video sequence, the mean absolute difference of pixel values between the two images can be used as a measure of the temporal correlation and, if the mean absolute difference is below a threshold, then the filters can be reused (840).

In another example, the decision (830) of whether to reuse the same filter or not can be made based on the distortion computation, relative to the original video source, after reconstructing the decoded image. If the computed distortion is above a specified threshold or if the computed distortion increases significantly from that of the previous image/region, then the pre-processor optimization can be performed.

In a yet further example, motion information that is either calculated at the image analysis stage or during video encoding, can be used to determine the motion of regions within the image. Then, the used filter parameters from the previous image can follow the motion of the corresponding region.

In another example, the neighboring regions can be used to determine the filter set over which to perform the search for the optimal filter. For example, if the optimization over the neighboring regions shows that a set of M out of N total possible filters always outperforms the others, then only those M may be used in the optimization of the current image region.

Also, the filter used for the current region can take the form of

$$a*f(L, T, D, P) + b$$

where L is the filtered value using the filter optimized for the image region to the left of the current region, T uses the filter optimized for the image region to the top, D the image region to the top right, and P the co-located image region from the previous image. The function f combines the filtered values from each filter using a mean, median, or other measure that also takes into account the similarity of the current region to each neighboring region. The variables a and b can be constant, or depend on spatial/temporal characteristics such as motion and texture. More generally, the filters considered could be those of neighboring regions that have already been selected. One example for the raster scan could be the just mentioned L, *T,* D, P case.

In a still further example, in addition to the rate-distortion performance of the filters, the "resource-distortion" performance of the filters may also be considered. In this case, the resources can include the available bits but may also include the available power in the encoding device, the computational complexity budget, and also delay constraints in the case of time-constrained applications.

In a still further example, the distortion measurement may contain a combination of multiple distortion metrics, or be calculated taking into account additional factors such as transmission errors and error concealment as well as other post-processing methods used by display or playback devices.

In conclusion, the methods shown in the present disclosure can be used to adaptively pre-process regions of a video sequence. The methods are aimed at improving the rate-distortion performance of the output video while minimizing the computational complexity of the optimization. Although the methods are described as separate example, they can also be used in combination within a low-complexity scalable video encoder.

In a scenario, one layer may contain a frame in a first type of color space representation, bit-depth, and/or scale (e.g. logarithmic or linear) and another layer may contain the same frame in a second type of color space representation, bit-depth, and/or scale. The teachings of this disclosure may be applied to optimize the prediction and compression of samples in one layer from samples in the other layer.

The methods and systems described in the present disclosure may be implemented in hardware, software, firmware or combination thereof. Features described as blocks, modules or components may be implemented together (e.g., in a logic device such as an integrated logic device) or separately (e.g., as separate connected logic devices). The software portion of the methods of the present disclosure may comprise a computer-readable medium which comprises instructions that, when executed, perform, at least in part, the described methods. The computer-readable medium may comprise, for example, a random access memory (RAM) and/or a read-only memory (ROM). The instructions may be executed by a processor (e.g., a digital signal processor (DSP), an application specific integrated circuit (ASIC), or a field programmable logic array (FPGA)).

The examples set forth above are provided to give those of ordinary skill in the art a complete disclosure and description of how to make and use the embodiments of the filter selection for video pre-processing in video applications of the disclosure, and are not intended to limit the scope of what the inventors regard as their disclosure. Modifications of the above-described modes for carrying out the disclosure may be used by persons of skill in the video art, and are intended to be within the scope of the following claims. All patents and publications mentioned in the specification may be indicative of the levels of skill of those skilled in the art to which the disclosure pertains.

It is to be understood that the disclosure is not limited to particular methods or systems, which can, of course, vary. It is also to be understood that the terminology used herein is for the purpose of describing particular embodiments only, and is not intended to be limiting. As used in this specification and the appended claims, the singular forms "a," "an," and "the" include plural referents unless the content clearly dictates otherwise. The term "plurality" includes two or more referents unless the content clearly dictates otherwise. Unless defined otherwise, all technical and scientific terms used herein have the same meaning as commonly understood by one of ordinary skill in the art to which the disclosure pertains.

A number of examples of the disclosure have been described. Nevertheless, it will be understood that various modifications may be made without departing from the scope of the present disclosure. Accordingly, other embodiments are within the scope of the following claims.

**Claims**

1. A method for selecting a downsampling filter for scalable video delivery, comprising:

inputting one or more input images into a plurality of downsampling filters (430-1) to form, for each downsampling filter, an output image or data stream;
encoding (450-1, 450-2) the output image or data stream to form an encoded and reconstructed (455-1, 455-2) image or data stream, wherein the encoding comprises a base layer encoding and an enhancement layer encoding (720);
for each downsampling filter, evaluating a metric (460-1, 460-2) of the encoded and reconstructed image or data stream; and
selecting a downsampling filter (470) among the plurality of downsampling filters (430-1) based on the evaluated metric for each downsampling filter and feedback from the enhancement layer encoding (720), **characterized in that** the feedback comprises information on adaptive upsampling filter parameters (350-1, 350-2, ..., 350-N) used for base layer to enhancement layer prediction.

2. The method of claim 1, further comprising 3D-interleaving the output of each downsampling filter.

3. The method of any one of the previous claims, further comprising performing a two-stage encoding, a first stage encoding occurring before selecting the downsampling filter and a second stage encoding occurring after selecting the downsampling filter.

4. The method of claim 3, wherein the first stage encoding is updated by updating reference picture buffers in the first stage encoding.

5. The method of any one of the previous claims, further comprising:

analyzing the input images before inputting the input images to the plurality of filters; and
reducing the number of filters to which the input images will be input or the number of regions to be later selected based on said analyzing.

6. The method of any one of the previous claims, further comprising:

encoding and reconstructing the output image or data stream before evaluating the metric of the output image or data stream.

7. The method of claim 5, wherein
the method is for scalable video delivery, the scalable video delivery comprising encoding and reconstructing the input images through a base layer and one or more enhancement layers, and
the plurality of filters comprise a plurality of base layer filters and a plurality of enhancement layer filters for each base layer filter.

8. The method of claim 1, wherein the method is for scalable delivery of video with different bit-depths, scales, and/or color space representations.

9. The method according to any one of the previous claims, wherein the metric comprises one or more of: distortion, bit rate, power, cost, time and computational complexity.

10. A filter selector for scalable video delivery, comprising:

a plurality of downsampling filters (430-1) adapted to receive an input image, and to form an output image or data stream;
a base layer encoder for encoding the output image or data stream at a first resolution to form a base layer image or data stream;
a predictor for adaptive upsampling of the base layer image or data stream to a second resolution to form an upsampled image or data stream, wherein the second resolution is higher than the first resolution;
an enhancement layer encoder for encoding the upsampled image or data stream to form an encoded and reconstructed output image or data stream; and
metrics evaluation modules (360-1, 360-2,..., 360-N) to evaluate, for each downsampling filter, a metric of the encoded and reconstructed output image or data stream; **characterized by** a downsampling filter selector (470) to select a downsampling filter among the plurality of downsampling filters based on the evaluated metric for each downsampling filter by the distortion modules and feedback from the predictor, wherein the feedback comprises information on filter parameters used in the adaptive upsampling.

**11.** The filter selector of claim 10, further comprising a region selector (310) for selecting one or more regions of the input image (320), wherein the plurality of processing filters are connected with the region selector and are adapted to receive the selected one or more regions.

**12.** The filter selector of claim 10, wherein the video delivery is a scalable video delivery, comprising base layer encoding and enhancement layer encoding.

**13.** An encoder for encoding a video signal according to the method recited in claim 1.

**14.** A computer-readable medium containing a set of instructions that causes a computer to perform the method recited in claim 1.

**Patentansprüche**

**1.** Verfahren zum Auswählen eines Downsampling-Filters für skalierbare Videoausgabe, das Folgendes umfasst:

Eingeben eines oder mehrerer Eingabebilder in mehrere Downsampling-Filter (430-1), um für jedes Downsampling-Filter ein Ausgabebild oder einen Ausgabedatenstrom zu bilden;
Codieren (450-1, 450-2) des Ausgabebildes oder des Ausgabedatenstroms, um ein codiertes und wiederhergestelltes (455-1, 455-2) Bild oder einen codierten und wiederhergestellten Datenstrom zu bilden, wobei die Codierung eine Basisschichtcodierung und eine Erweiterungsschichtcodierung (720) umfasst;
Beurteilen einer Metrik (460-1, 460-2) des codierten und wiederhergestellten Bildes oder des codierten und wiederhergestellten Datenstroms für jedes Downsampling-Filter; und
Auswählen eines Downsampling-Filters (470) aus den mehreren Downsampling-Filtern (430-1) anhand der beurteilten Metrik für jedes Downsampling-Filter und der Rückmeldung von der Erweiterungsschichtcodierung (720), **dadurch gekennzeichnet, dass** die Rückmeldung Informationen über adaptive Upsampling-Filterparameter (350-1, 350-2, ..., 350-N), die für die Vorhersage von der Basisschicht zu der Erweiterungsschicht verwendet werden, umfasst.

**2.** Verfahren nach Anspruch 1, das ferner das 3D-Verschachteln der Ausgabe jedes Downsampling-Filters umfasst.

**3.** Verfahren nach einem der vorhergehenden Ansprüche, das ferner das Ausführen einer 2weistufen-Codierung umfasst, wobei die Codierung der ersten Stufe vor dem Auswählen des Downsampling-Filters erfolgt und die Codierung der zweiten Stufe nach dem Auswählen des Downsampling-Filters erfolgt.

**4.** Verfahren nach Anspruch 3, wobei die Codierung der ersten Stufe durch Aktualisieren von Referenzbildzwischenspeichern in der Codierung der ersten Stufe aktualisiert wird.

**5.** Verfahren nach einem der vorhergehenden Ansprüche, das ferner umfasst:

Analysieren der Eingabebilder, bevor die Eingabebilder an die mehreren Filter eingegeben werden; und
Verringern der Anzahl der Filter, in die die Eingabebilder eingegeben werden, oder der Anzahl der Bereiche, die später anhand des Analysierens ausgewählt werden.

**6.** Verfahren nach einem der vorhergehenden Ansprüche, das ferner umfasst:

Codieren und Wiederherstellen des Ausgabebildes oder des Ausgabedatenstroms, bevor die Metrik des Ausgabebildes oder des Datenstroms beurteilt wird.

**7.** Verfahren nach Anspruch 5, wobei das Verfahren einer skalierbaren Videoausgabe dient, wobei die skalierbare Videoausgabe das Codieren und Wiederherstellen der Eingabebilder durch eine Basisschicht und eine oder mehrere Erweiterungsschichten umfasst, und die mehreren Filter mehrere Basisschichtfilter und mehrere Erweiterungsschichtfilter für jedes Basisschichtfilter umfassen.

**8.** Verfahren nach Anspruch 1, wobei das Verfahren für skalierbare Videoausgabe mit verschiedenen Bittiefen, Skalen und/oder Farbraumrepräsentationen ist.

**9.** Verfahren nach einem der vorhergehenden Ansprüche, wobei die Metrik eines oder mehrere der Folgenden umfasst: Distorsion, Bitrate, Leistung, Kosten, Zeit und Computer-Komplexität.

**10.** Filterauswahlvorrichtung für skalierbare Videoausgabe, die Folgendes umfasst:

mehrere Downsampling-Filter (430-1), die ausgelegt sind, ein Eingabebild zu empfangen und ein Ausgabebild oder einen Ausgabedatenstrom zu bilden;
einen Basisschichtcodierer zum Codieren des Ausgabebilds oder des Datenstroms mit einer ersten Auflösung, um ein Basisschichtbild oder einen Basisschichtdatenstrom zu bilden;
eine Vorhersagevorrichtung zum adaptiven Upsampling des Basischichtbildes oder des Datenstroms auf eine zweite Auflösung, um ein aufwärts abgetastetes Bild oder einen aufwärts abgetasteten Datenstrom zu bilden, wobei die zweite Auflösung höher als die erste Auflösung ist;
einen Erweiterungsschichtcodierer zum Codieren des aufwärts abgetasteten Bildes oder des aufwärts abgetasteten Datenstroms, um ein codiertes und wiederhergestelltes Ausgabebild oder einen codierten und wiederhergestellten Datenstrom zu bilden; und
Module für die metrische Beurteilung (360-1, 360-2, ..., 360-N), um für jedes Downsampling-Filter eine Metrik des codierten und wiederhergestellten Ausgabebildes oder des codierten und wiederhergestellten Datenstroms zu beurteilen; **gekennzeichnet durch**
eine Downsampling-Filter-Auswahlvorrichtung (470), um ein Downsampling-Filter aus den mehreren Downsampling-Filtern anhand der beurteilten Metrik für jedes Downsampling-Filter **durch** die Distorsionsmodule und die Rückmeldung von der Vorhersagevorrichtung auszuwählen, wobei die Rückmeldung Informationen über die in dem adaptiven Upsampling verwendeten Filterparameter umfasst.

**11.** Filterauswahlvorrichtung nach Anspruch 10, die ferner eine Bereichsauswahlvorrichtung (310) zum Auswählen eines oder mehrerer Bereiche des Eingabebildes (320) umfasst, wobei die mehreren Verarbeitungsfilter mit der Bereichsauswahlvorrichtung verbunden sind und ausgelegt sind, den oder die ausgewählten Bereiche zu empfangen.

**12.** Filterauswahlvorrichtung nach Anspruch 10, wobei die Videoausgabe eine skalierbare Videoausgabe ist, die eine Basisschichtcodierung und eine Erweiterungsschichtcodierung umfasst.

**13.** Codierer zum Codieren eines Videosignals gemäß dem Verfahren nach Anspruch 1.

**14.** Computerlesbares Medium, das einen Satz von Anweisungen enthält, die bewirken, dass ein Computer das Verfahren nach Anspruch 1 ausführt.

**Revendications**

**1.** Procédé de sélection d'un filtre de sous-échantillonnage pour la délivrance échelonnable de vidéo, comprenant :

l'entrée d'une ou de plusieurs images d'entrée dans une pluralité de filtres de sous-échantillonnage (430-1) pour former, pour chaque filtre de sous-échantillonnage, une image ou un flux de données de sortie ;
le codage (450-1, 450-2) de l'image ou du flux de données de sortie pour former une image ou un flux de données codé et reconstruit (455-1, 455-2), le codage comprenant un codage de couche de base et un codage de couche de rehaussement (720) ;
pour chaque filtre de sous-échantillonnage, l'évaluation d'une métrique (460-1, 460-2) de l'image ou du flux de données codé et reconstruit ; et
la sélection d'un filtre de sous-échantillonnage (470) parmi la pluralité de filtres de sous-échantillonnage (430-1) en fonction de la métrique évaluée pour chaque filtre de sous-échantillonnage et du retour d'informations du codage de couche de rehaussement (720), **caractérisé en ce que** le retour d'informations comprend des informations sur des paramètres de filtre de suréchantillonnage adaptatifs (350-1, 350-2, ..., 350-N) utilisés pour la prédiction couche de base à couche de rehaussement.

**2.** Procédé selon la revendication 1, comprenant en outre l'entrelacement 3D de la sortie de chaque filtre de sous-échantillonnage.

**3.** Procédé selon l'une quelconque des revendications précédentes, comprenant en outre l'exécution d'un codage en deux étapes, une première étape de codage se produisant avant la sélection du filtre de sous-échantillonnage et une seconde étape de codage se produisant après la sélection du filtre de sous-échantillonnage.

**4.** Procédé selon la revendication 3, dans lequel la première étape de codage est actualisée en actualisant des tampons d'image de référence dans la première étape de codage.

**5.** Procédé selon l'une quelconque des revendications précédentes, comprenant en outre :

l'analyse des images d'entrée avant d'entrer les images d'entrée dans la pluralité de filtres ; et la réduction du nombre de filtres dans lesquels les images d'entrée seront entrées ou du nombre de régions à sélectionner plus tard en fonction de ladite analyse.

**6.** Procédé selon l'une quelconque des revendications précédentes, comprenant en outre :

le codage et la reconstruction de l'image ou du flux de données de sortie avant l'évaluation de la métrique de l'image ou du flux de données de sortie.

**7.** Procédé selon la revendication 5, dans lequel le procédé est un procédé de délivrance échelonnable de vidéo, la délivrance échelonnable de vidéo comprenant le codage et la reconstruction des images d'entrée par le biais d'une couche de base et d'une ou plusieurs couches de rehaussement, et la pluralité de filtres comprend une pluralité de filtres de couche de base et une pluralité de filtres de couche de rehaussement pour chaque filtre de couche de base.

**8.** Procédé selon la revendication 1, dans lequel le procédé est un procédé de délivrance échelonnable de vidéo avec différentes profondeurs binaires, échelles et/ou représentations d'espace couleurs.

**9.** Procédé selon l'une quelconque des revendications précédentes, dans lequel la métrique comprend un ou plusieurs des éléments suivants : distorsion, débit binaire, puissance, coût, temps et complexité de calculs.

**10.** Sélecteur de filtre pour la délivrance échelonnable de vidéo, comprenant :

une pluralité de filtres de sous-échantillonnage (430-1) adaptée pour recevoir une image d'entrée, et former une image ou un flux de données de sortie ; un codeur de couche de base pour coder l'image ou le flux de données de sortie à une première résolution pour former une image ou un flux de données de couche de base ; un prédicteur pour suréchantillonner adaptativement l'image ou le flux de données de couche de base à une seconde résolution pour former une image ou un flux de données suréchantillonné, la seconde résolution étant supérieure à la première résolution ; un codeur de couche de rehaussement pour coder l'image ou le flux de données suréchantillonné pour former une image ou un flux de données de sortie codé ou reconstruit ; et des modules d'évaluation de métriques (360-1, 360-2, ..., 360-N) pour évaluer, pour chaque filtre de sous-échantillonnage, une métrique de l'image ou du flux de données de sortie codé et reconstruit ;

**caractérisé par**

un sélecteur de filtre de sous-échantillonnage (470) pour sélectionner un filtre de sous-échantillonnage parmi la pluralité de filtres de sous-échantillonnage en fonction de la métrique évaluée pour chaque filtre de sous-échantillonnage par les modules de distorsion et le retour d'informations depuis le prédicteur, le retour d'informations comprenant des informations sur les paramètres de filtre utilisés dans le suréchantillonnage adaptatif.

**11.** Sélecteur de filtre selon la revendication 10, comprenant en outre un sélecteur de région (310) pour sélectionner une ou plusieurs régions de l'image d'entrée (320), dans lequel la pluralité de filtres de traitement est connectée au sélecteur de région et adaptée pour recevoir les une ou plusieurs régions.

**12.** Sélecteur de filtre selon la revendication 10, dans lequel la délivrance de vidéo est une délivrance échelonnable de vidéo, comprenant un codage de couche de base et un codage de couche de rehaussement.

**13.** Codeur pour coder un signal vidéo selon le procédé de la revendication 1.

**14.** Support lisible par ordinateur contenant un ensemble d'instructions qui amène un ordinateur à exécuter le procédé cité à la revendication 1.

**FIG. 1**

**FIG. 2**

**FIG. 3**

EP 2 422 521 B1

**FIG. 4**

570

550-1

Input
Source

| Filter 1 | ↓ | Simplified Encode | D |

550-2

| Filter 2 | ↓ | Simplified Encode | D |

550-3

| Filter 3 | ↓ | Simplified Encode | D |

550-N

| Filter N | ↓ | Simplified Encode | D |

Filter
Selection

↓

Region
Selection

577

Images/Motion
Info Out

Encode

Encoded
Bitstream

575

# FIG. 5

620

630

610

Input
Source

Image/
Sequence
Analysis

Select
Filter Set

Pre-processor
Optimization

Output to
Encoder

## FIG. 6

710

730

720

Input
Source

Pre-processing
Filter Selection

BL
Encoder

EL
Encoder

Output
bitstreams

Feedback from Encoder

740

## FIG. 7

810

BL
Bitstream

Pre-processor
Optimization

Encode
(BL+EL)

EL
Bitstream

Input
Source

820

830

Yes

840

Image
Analysis

Region
Selection

Re-
optimize?

No

Prev.
Filter

Reconstruct
(BL+EL)

D

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61140886 B
- US 61170995 B
- US 5193000 A

### Non-patent literature cited in the description

- **J.R. OHM.** Advances in Scalable Video Coding. *Proceedings of the IEEE,* January 2005, vol. 93 (1
- **W. LI ; J-R. OHM ; M. VAN DER SCHAAR ; H. JIANG ; S. LI.** MPEG-4 Video Verification Model Version 18.0. *ISO/IEC JTC1/SC29/WG11 N3908,* January 2001
- **E. DUBOIS ; S. SABRI.** Noise Reduction in Image Sequences Using Motion-Compensated Temporal Filtering. *IEEE Trans. on Communications,* July 1984, vol. COM-32 (7
- **S. CHANG ; B. YU ; M. VETTERLI.** Adaptive Wavelet Thresholding for Image Denoising and Compression. *IEEE Trans. On Image Processing,* September 2000, vol. 9 (9), 1532-1546
- **Y. TSAIG ; M. ELAD ; P. MILANFAR ; G. GOLUB.** Variable Projection for Near-Optimal Filtering in Low Bit-Rate Coders. *IEEE Trans. on Circuits and Systems for Video Technology,* January 2005, vol. 15 (1), 154-160